# EUROPÄISCHE PATENTANMELDUNG

(11) **EP 1 215 639 A2**
(43) Veröffentlichungstag der Anmeldung: **19.06.2002**
(21) Anmeldenummer: 01126958.6
(22) Anmeldetag: 13.11.2001
(51) Int. Cl.: G08C 23/04

(54) **Vorrichtung und Verfahren zur Eingabe von Informationen in eine Steuereinheit**

(30) Priorität: 15.12.2000 DE 10062671
(71) Anmelder: BSH Bosch und Siemens Hausgeräte GmbH, 81669 München (DE)
(72) Erfinder: Mager, Gerhard, 90556 Cadolzburg (DE); Borgelt, Michael, 90441 Nürnberg (DE)

(57) **Zusammenfassung**

Die Erfindung betrifft eine Vorrichtung und ein Verfahren zur Eingabe von Informationen in eine Steuereinheit, insbesondere eine zentrale Steuereinheit eines Hausgerätes. Um eine verbesserte Vorrichtung und ein dementsprechendes Verfahren zur Eingabe von Informationen insbesondere in eine zentrale Steuereinheit eines Hausgerätes zu schaffen wird vorgeschlagen, daß das Hausgerät (2) eine Datenschnittstelle (9) aufweist, über die das Hausgerät (2) mit einem Mobiltelefon (13), einem für Mobilfunk ausgerüsteten Computer oder einem ähnlichen Gerät der Kommunikationstechnik verbunden ist, und die Steuereinheit (7) des Hausgerätes (2) durch die Datenschnittstelle (9) zur Übernahme von Daten und Informationen, die über das Mobiltelefon (13) von einem Server-Rechner (20) eines Dienstanbieters (4) empfangen werden, ausgebildet ist.

## Beschreibung

Die vorliegende Erfindung betrifft eine Vorrichtung und ein Verfahren zur Eingabe von Informationen in eine Steuereinheit, insbesondere in eine zentrale Steuereinheit eines Hausgerätes.

Es sind Vorrichtungen und dementsprechende Verfahren bekannt, bei denen eine Steuereinheit in Form von Schaltwerken ausgeführt ist. Sie sind weitgehend aus mechanischen Komponenten aufgebaut, so daß sie einen komplexen Aufbau aufweisen, Verschleiß unterliegen und auch in sonstiger Weise störungsanfällig sind. Insbesondere ist es bei überwiegend mechanisch aufgebauten Steuereinheiten nicht möglich, in einfacher Weise neue Informationen in die Steuereinheit einzuführen. Sie ist zusammen mit entsprechenden Eingabevorrichtungen starr. Es sind demgegenüber aber auch Hausgeräte bekannt, die zur Festlegung eines jeweiligen Geräte-Funktionsumfangs Steuereinheiten mit elektrischen und/oder elektronischen Programmablaufsteuerungen besitzen. Bei einer Verbesserung, einer Aktualisierung oder gar einer Erweiterung des Umfangs der in dem Hausgerät ausführbaren Funktionen wird eine derartige Steuereinheit entsprechend hard- und/oder softwaremäßig angepaßt.

Eine Aktualisierung der Programmablaufsteuerung setzt aber, wie eine Reparatur, die Anwesenheit eines Kundendiensttechnikers am Standort des Hausgerätes voraus. Ferner ist sie in der Regel mit dem Öffnen des Hausgerätes sowie einem Austausch von Steuerungskomponenten durch den Kundendiensttechniker verbunden. Nach Auslieferung des Haushaltsgerätes an den Handel oder gar den Anwender ist ein technischer Eingriff, z. B. Softwaremodifikationen durch Up-date und Installation von spezifischen individuellen Anwender-Softwareprogrammen, nicht oder nur mit aufwendiger Ausrüstung möglich. Weiterhin ist bei einem Kundendiensteinsatz vor Ort ein Diagnosesystem, bestehend z. B. aus Laptop, Hardware-Interface und Testadapter, nur mit Vorarbeiten und teilweise erheblichen Rüstzeiten einzusetzen. Durch die Vielzahl der Haushaltsgeräte ist auch die Vielfalt der Diagnosesysteme sehr hoch, so daß sie auch für den Kundendienst nicht mehr flexibel und kostengünstig einsetzbar ist. Eine Anpassung von Hausgeräten beim Kunden oder eine nachträgliche Verbesserung der Geräteeigenschaften wegen eines zwischenzeitlich eingetretenen wissenschaftlichen und/oder technischen Fortschritts ist somit auch aufgrund des vorstehend beschriebenen Aufwandes selbst bei modernen Hausgeräten kaum möglich. Dementsprechend veralten die Hausgeräte aufgrund eines beschränkten Umfangs ihrer Funktionen und der Unfähigkeit zur Anpassung an neue Umgebungs- und/oder Anwendungsparameter, beispielsweise spezielle Maßnahmen zum Wasser- und Stromeinsparen, Verwendung neuartiger Waschsubstanzen oder Anwendung des Hausgerätes auf neue Produkte, sehr schnell.

Es ist die Aufgabe der vorliegenden Erfindung, ein verbessertes Verfahren und eine dementsprechende Vorrichtung zur Eingabe von Informationen in eine Steuereinheit auch an einem Hausgerät zu schaffen.

Diese Aufgabe wird erfindungsgemäß durch eine Vorrichtung mit den Merkmalen von Anspruch 1 und ein Verfahren mit den Merkmalen von Anspruch 11 gelöst. Vorteilhafte Weiterbildungen der Erfindung sind Gegenstand der jeweiligen Unteransprüche.

Erfindungsgemäß sieht eine Vorrichtung zur Eingabe einer Information in eine Steuereinheit an einem Hausgerät vor, daß das Hausgerät eine Datenschnittstelle aufweist, über die das Hausgerät mit einem Mobiltelefon, einem für Mobilfunk ausgerüsteten Computer oder einem ähnlichen Gerät der Kommunikationstechnik verbunden ist. Die Steuereinheit des Hausgerätes ist durch die Datenschnittstelle zur Übernahme von Daten bzw. Informationen, die über das Mobiltelefon von einem Server-Rechner eines Dienstanbieters empfangen werden, ausgebildet. Das Mobiltelefon und die sonstigen alternativ genannten Geräte nehmen die Aufgabe einer Transfereinheit oder Relaisstelle zu einem Mobilfunknetzwerk mit daran angeschlossenen Server-Rechner eines Dienstanbieters wahr. Der grundsätzliche Dateninhalt bleibt in jeder Richtung einer Übertragung zwischen dem Haushaltsgerät über eine gemeinsame Schnittstelle zwischen dem Haushaltsgerät und dem Mobiltelefon und der Übertragung über ein Mobilfunknetzwerk zu dem Daten-Server unverändert. Geändert und damit den jeweiligen Anforderungen angepaßt wird nur das Transportmedium und die Art des Datentransports, der in den verschiedenen Abschnitten optisch, per Funk oder auch drahtgebunden erfolgen kann.

In einer Weiterbildung der Erfindung ist die Datenschnittstelle an dem Hausgerät zum Aufbau einer drahtlosen Datenverbindung ausgebildet. Kabel oder sonstige Verbindungselemente sind damit vorteilhafterweise nicht notwendig. So wird auch eine zusätzliche Störungsquelle ausgeschlossen und eine Datenverbindung zwischen den genannten Geräten kann schnell und in einfacher Weise aufgebaut werden. Die Anwesenheit eines Kundendienstmitarbeiters vor Ort ist somit nicht zwingend erforderlich.

Vorteilhafterweise ist die Datenschnittstelle an dem Hausgerät über eine Datenverbindung auf Infrarot-Basis mit dem Mobiltelefon, dem für Mobilfunk ausgerüsteten Computer oder einem ähnlichen Gerät der Kommunikationstechnik verbunden. Derartige Datenverbindungen werden heute an vielfältigen Geräte mit zunehmendem Maß eingesetzt und werden in Zukunft sehr weit verbreitet. In der modernen Datenkommunikation werden Datenverbindung auf Infrarot-Basis, z. B. in Mobiltelefonen bzw. Handys, Personal Digital Assistants (PDA), Drucker, Digitalkamera etc., in sehr hohen Stückzahlen eingesetzt. Sie sind in miniaturisierter Bauform ausgeführt. Bei sehr geringen einmaligen Anschaffungskosten werden derartige IR-Sende- und Empfangseinheiten in absehbarer Zeit überall verfügbar sein.

Die Datenschnittstelle ist in einer bevorzugten Ausführungsform der Erfindung dem Standard der Infrared Data Association (IrDA) oder einem vergleichbaren Standard entsprechend ausgebildet. Durch die Kompatibilität und Normung des IrDA-Protokoll und den hohen Verbreitungsgrad von IrDA-Transceivern ist eine bidirektionale Datenkommunikation zwischen dem Haushaltsgerät und dem Handy auf der Basis preiswerter IR-Kommunikation möglich. Das Hausgerät besitzt demnach in einer Ausführungsform einen Infrarot-Transmitter und einen Infrarot-Receiver einer entsprechenden Steuerungslogik. Die Datenschnittstelle ist für eine drahtlose Datenkommunikation mittels Infrarot über Distanzen von bis zu ca. 1 m mit einer Datenmenge von ca. 9,6 bis etwa 115,2 kBit/s ausgebildet. Ferner weist die Datenschnittstelle für eingehende Infrarot-Signale vorzugsweise einen Winkel von etwa 15 bis ca. 30° rotationssymmetrisch um eine optische Achse auf.

Die Datenverbindung zwischen dem Mobiltelefon, einem für Mobilfunk ausgerüsteten Computer oder einem ähnlichen Gerät der Kommunikationstechnik ist insbesondere als flexible Kurzverbindung ausgebildet. Sie arbeitet nach einem oder mehreren der vorstehend beschriebenen Merkmale, insbesondere nach dem IrDA-Standard. Die Datenverbindung zwischen dem Mobiltelefon, einem für Mobilfunk ausgerüsteten Computer oder einem ähnlichen Gerät der Kommunikationstechnik kann alternativ nach dem Bluetooth-Standard oder einem vergleichbaren Standard zur Gerätekommunikation arbeiten.

Von einem Hausgerät an dem Standort des Anwenders und/oder dem Mobiltelefon, einem für Mobilfunk ausgerüsteten Computer oder einem ähnlichen Gerät der Kommunikationstechnik aus wird eine konkretisierte Meldung eines Anwenders an einem Standort an den Dienstanbieter abgesandt. Die genannten Geräte können auch zur automatischen Versendung einer derartigen Meldung an den Dienstanbieter ausgebildet sein. Diese Meldung umfaßt dabei in jedem Fall eine Anforderungsskizze und eine Typisierung des jeweils betreffenden Hausgerätes. Es wird mithin eine sehr konkrete Anforderung mit den Wünschen des Anwenders an den Dienstanbieter übermittelt.

In einer vorteilhaften Ausführungsform der Erfindung ist das Mobiltelefon, der für Mobilfunk ausgerüsteten Computer oder ein ähnliches Gerät der Kommunikationstechnik mindestens zur Zwischenspeicherung empfangener und/oder zu versendender Daten ausgebildet. Ist in unmittelbarer Position des Haushaltsgerätes keine Verbindung zum Mobilfunknetzwerk möglich, beispielsweise aufgrund eines Funklochs, da z.B. eine Waschmaschine in einem Kellerraum steht, so werden die Daten in dem Mobiltelefon, einem für Mobilfunk ausgerüsteten Computer oder einem ähnlichen Gerät der Kommunikationstechnik zwischengespeichert und dann erst nachfolgend an ein jeweils betreffendes Hausgerät übermittelt.

Mit oder nach dem Eingang von Daten wird in dem Mobiltelefon, einem für Mobilfunk ausgerüsteten Computer oder einem ähnlichen Gerät der Kommunikationstechnik in einer vorteilhaften Weiterbildung der Erfindung der Eingang mit einer Angabe des betreffenden Hausgerätes angezeigt. Diese Anzeige erfolgt insbesondere in Form einer SMS, einer eMail oder einer sonstigen akustischen, optischen und/oder taktilen Nachricht für einen Anwender oder Betreiber der Hausgerätes. Eine Meldung insbesondere in Form einer Durchsage und/oder Anzeige an dem Mobiltelefon oder einem ähnlichen Gerät weist den Anwender auf die zur Verfügung stehende Aktualisierung hin. Ferner kann das betreffende Gerät angezeigt werden, an der die Aktualisierung einzuspielen ist.

Das Mobilfunknetzwerk ist vorzugsweise dauerhaft mit dem Server-Rechner des Dienstanbieters verbunden, wo diverse Programme gespeichert sind. Eine direkte, bidirektionale und mobile Kommunikation zum Datenaustausch zwischen den Haushaltsgerät und dem Server ist damit auf Veranlassung des Kunden - durch Absendung einer Nachricht bzw. Anforderung an den Dienstanbieter - jederzeit möglich. So ist auch ein Verfahren zur Eingabe von Informationen, insbesondere in eine zentrale Steuereinheit eines erfindungsgemäß ausgerüsteten Hausgerätes, auf Anforderung durch einen Anwender oder durch den Dienstanbieter dauernd ausführbar, wobei unter Nutzung einer vorhandenen Infrastruktur, nämlich über ein Mobiltelefon oder ein ähnliches Gerät, eine Datenverbindung zwischen dem Hausgerät und einem Server-Rechner eines Dienstanbieters aufgebaut wird, und über diese Datenverbindung Daten in die Steuereinheit des Hausgerätes übertragen werden.

Auf dem Server-Rechner des Dienstanbieters sind Softwaremodifikation, aktualisierte Steuerungs-Software und/oder spezifische individuelle Anwender- u. Kundendienst-Programmen flexibel und immer auf den neuesten technischen Stand als Up-date verfügbar. Auch spezifische individuelle Anwender- und Kundendienst-Programme sind erfindungsgemäß so mobil, schnell und vorzugsweise auch weltweit und immer auf dem neuesten technischen Stand verfügbar.

In einem Fehlerfall wird eine Ferndiagnose von dem Dienstanbieter aus über die Datenverbindung zwischen dem Hausgerät, dem Mobiltelefon, einem für Mobilfunk ausgerüsteten Computer oder einem ähnlichen Gerät der Kommunikationstechnik und dem Dienstanbieter ermöglicht. Im Fehlerfall ist u. U. eine Ferndiagnose möglich, so daß die für eine Fehlersuche benötigte Zeit verkürzt wird. Der Kundendienst kann dadurch benötigte Ersatzteile vorab genau disponieren. Ferner wird die Vielfalt der derzeit vorzuhaltenden Diagnosesysteme, wie z. B. Lap-Top, Hardware-Interface und Testadapter etc., stark reduziert, da die Diagnose zu einem wesentlichen Teil hin zum Dienstanbieter verlagert werden kann.

Vorteilhafterweise kann über das Mobiltelefon eine Ansage und/oder Statusanzeige und/oder Anweisungen zur Bedienung von dem Dienstanbieter aus für den Anwender am Standort des Hausgerätes erfolgen, insbesondere in einem Fehlerfall, aber auch im Normalbetrieb.

Durch den Dienstanbieter werden in einer wesentlichen Weiterbildung der Erfindung an dem Hausgerät neue Dienste, Dienstleistungen, Funktionen etc., wie z. B. ein temporäres Leasing von zusätzlichen Gerätefunktionen aus Anforderung durch den Anwender angeboten. Vorzugsweise werden auch ortsabhängige Parametereinstellungen, wie z. B. Einstellung der Wasserhärte bei Geschirrspülern oder Waschmaschinen oder lokale Stromtarife, automatisiert abgerufen und/oder von dem Dienstanbieter aus aktualisiert.

Vorzugsweise wird eine Abrechnung für eine durch den Dienstanbieter erbrachte Dienstleistung über die Rechnung des Mobiltelefons oder über eine Abrechnung einer anderen Kommunikationsdienstleistung vorgenommen. Damit sind in jedem Fall alleine durch die Rufnummer des Mobiltelefons dem Anwender alle für eine Abrechnung relevanten Daten bekannt. Zudem ist diese Art der Abrechnung für den Dienstanbieter ohne eigene Schreib- und Versandkosten sehr bequem.

Eine erfindungsgemäße Eingabevorrichtung kann ohne Einschränkungen der Funktionalität erweitert werden. So können innerhalb eines Haushaltes diverse Geräte, insbesondere auch andere Geräte als nur Hausgeräte, mit einem erfindungsgemäßen Verfahren zur Eingabe von Informationen in eine Steuereinheit ausgebildet sein. Gleichzeitig und parallel können auch mehrere Geräte mit unterschiedlichen Anforderungen von einem Dienstanbieter aus bedient werden. Dabei zeichnet sich ein erfindungsgemäßes Verfahren insbesondere durch die Ausbildung einer sehr starken Kundenbindung aus. Dabei können diverse Geräte, Haushaltsgeräte, Kommunikationseinrichtungen wie ein Mobiltelefon hergestellt und vertrieben und/oder die vorstehend beschriebenen Dienstleistungen von einem Hersteller als übergreifendem Unternehmer erbracht werden.

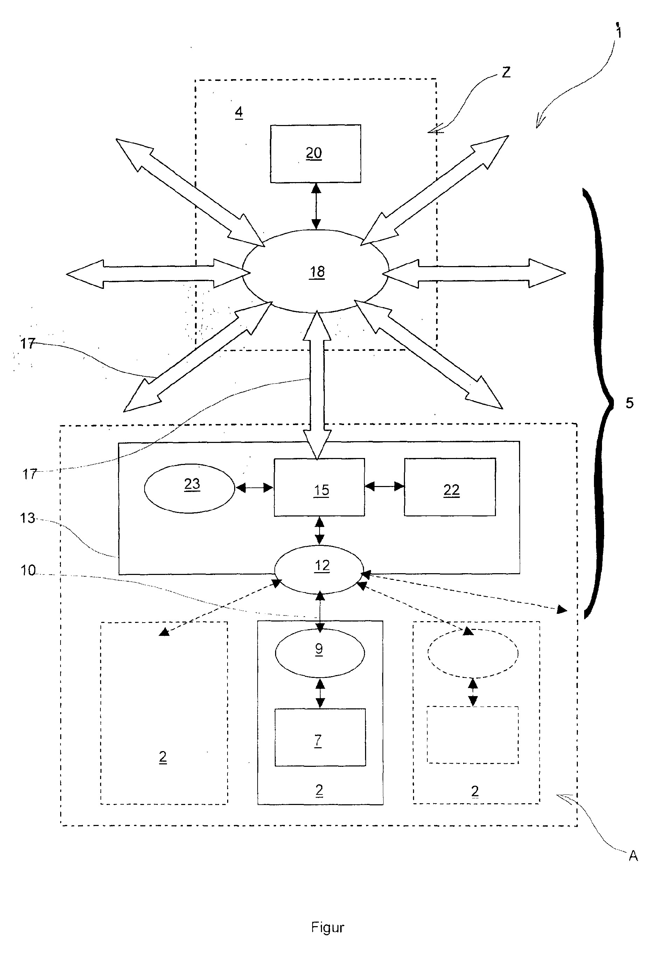

Nachfolgend wird ein Ausführungsbeispiel der Erfindung anhand der Zeichnung näher erläutert:

In der Zeichnung zeigt die einzige Figur eine schematische Vorrichtung 1 zur Eingabe einer Information in ein Hausgerät 2. Die Vorrichtung 1 umfaßt zwei voneinander entfernte Teile, nämlich einen Dienstanbieter 4 an einem Ort Z und das Hausgerät 2 an einem Standort A. Zur Übersendung einer Information wird der Dienstanbieter 4 durch eine Meldung oder Anforderung veranlaßt, die von dem betreffenden Hausgerät 2 aus über eine Datenverbindung 5 zu dem Dienstanbieter 4 übersandt wird. In dieser Meldung sind gerätespezifische Informationen und die Wünsche eines Anwenders am Standort A bezüglich einer Erneuerung einer Programmsteuerung des Hausgerätes 2 enthalten.

Die Meldung wird nach Ablauf einer voreingestellten Zeitspanne seit Kauf des Hausgerätes 2 automatisch von einer zentralen Steuerung 7 innerhalb des Hausgerätes 2 zur Anforderung eines Up-dates der Programmsteuerungssoftware erzeugt. Die Meldung wird von der zentralen Steuerung 7 an eine Datenschnittstelle 9 innerhalb des Hausgerätes 2 weitergeleitet. Von dort wird die Meldung über eine drahtlose Datenverbindung 10 nach dem s.g. IrDA-Standard an eine IrDA-Schnittstelle 12 eines Mobiltelefons 13 übersandt. In dem Mobiltelefon 13 wird die Meldung einer Sende- und Empfangseinheit 15 mit eigener Steuerung übergeben, die daraufhin ebenfalls automatisch über ein Mobilfunknetz einen Datenkanal 17 zu einer Sende- und Empfangseinheit 18 aufbaut, die mit einem Server-Rechner 20 des Dienstanbieters 4 verbunden ist.

Aus einer Datenbank des Server-Rechners 20 wird eine der Meldung entsprechende Information bzw. aktualisierte Programmsteuerungssoftware ausgelesen und über die Sende- und Empfangseinheit 18 und den Datenkanal 17 zu dem Mobiltelefon 13 übersandt. Falls nun keine drahtlose Verbindung 10 zwischen dem betreffenden Hausgerät 2 und dem Mobiltelefon 13 aufgebaut werden kann, so speichert das Mobiltelefon 13 die eingetroffene Information in einem Speicher 22 zwischen. Zugleich wird auf einer Anzeige 23 eine Meldung unter Begleitung eines akustischen Signals zur Information des Anwenders eingeblendet. Der Anwender wird dadurch aufgefordert, sich zu dem Hausgerät 2 zum automatischen Aufbau einer drahtlosen Verbindung 10 zwischen dem betreffenden Hausgerät 2 und dem Mobiltelefon 13 und zum Einspielen der aktualisierten Programmsteuerungssoftware zu begeben. Ein Abstand von ca. 1m reicht aus. Und da die Datenschnittstelle 9 nach dem IrDA-Standard einen relativ weiten Akzeptanzwinkel von etwa 15 bis ca. 30° rotationssymmetrisch um eine optische Achse aufweist, so reicht schon eine ungefähre Ausrichtung der IrDA-Schnittstelle 12 des Mobiltelefons 13 auf die Datenschnittstelle 9 des Hausgerätes 2.

Damit ist zur flexiblen Übertragung von Daten zu einer aktualisierten Software für eine Programmsteuerung über eine Datenverbindung 5 zwischen dem Dienstanbieter 4 und dem Hausgerät 2 auf einer bidirektionalen Mobilfunk-Übertragung in wesentlichen vorhandene Infrastruktur genutzt worden. Ohne wesentliche Mehrkosten oder zusätzliche Kosten nutzt die beschriebene Vorrichtung 1 ein Mobiltelefon 13 als ein massenhaft verbreitetes Kommunikationsmittel mit vorhandener Schnittstelle. Dazu ist an dem Hausgerät 2 selber nur die Datenschnittstelle 9 mit Unterstützung durch eine entsprechende Steuereinheit 7 vorzusehen, die gegenüber einer bekannten Steuerungsfunktion auch die Übernahme von Informationen von der Datenschnittstelle 9 zuläßt oder unterstützt.

Das Mobiltelefon 13 hat die Aufgabe einer Transfereinheit oder einer Relaisstelle zu einem Mobilfunknetzwerk. Dabei steht das Mobilfunknetzwerk mit dem daran angeschlossenen Server-Rechner 20 des Dienstanbieters 4 in dauerhafter Verbindung. Der grundsätzliche Dateninhalt bleibt auf dem beschriebenen Übertragungsweg über das Mobiltelefon 13 in beiden Richtungen unverändert.

Aber auch außerhalb einer Aktualisierung der Gerätesoftware wird das Mobiltelefon 13 als bereits vorhandene Einrichtung genutzt: Es erfolgt eine Ansage, eine Statusanzeige oder ein ähnlicher Hinweis, durch den der Anwender am Standort A informiert wird. Insbesondere werden dem Anwender in einem Fehlerfall konkrete Anweisungen zur Bedienung von dem Dienstanbieter 4 aus über das Mobiltelefon 13 übermittelt. Sonstige Anweisungen zur Bedienung werden aber auch während des normalen Betriebes übermittelt. Kurzhinweise werden dabei als SMS (Short Message Service) an das Mobiltelefon 13 gegeben mit der Möglichkeit eines direkten Rückrufs des Anwenders beim Dienstanbieter 4 zum Einholen ergänzender und/oder vertiefender mündlicher Information von einem Berater bzw. einer telefonischen Hotline.

## Patentansprüche

1. Vorrichtung (1) zur Eingabe einer Information in eine Steuereinheit, insbesondere eine zentrale Steuereinheit (7) eines Hausgerätes (2),
**dadurch gekennzeichnet, daß** das Hausgerät (2) eine Datenschnittstelle (9) aufweist, über die das Hausgerät (2) mit einem Mobiltelefon (13), einem für Mobilfunk ausgerüsteten Computer oder einem ähnlichen Gerät der Kommunikationstechnik verbunden ist, und die Steuereinheit (7) des Hausgerätes (2) durch die Datenschnittstelle (9) zur Übernahme von Daten und Informationen, die über das Mobiltelefon (13) von einem Server-Rechner (20) eines Dienstanbieters (4) empfangen werden, ausgebildet ist.

2. Vorrichtung (1) nach Anspruch 1,
**dadurch gekennzeichnet, daß** die Datenschnittstelle (9) an dem Hausgerät (2) zum Aufbau einer drahtlosen Datenverbindung (10) ausgebildet ist.

3. Vorrichtung (1) nach einem oder beiden der vorhergehenden Ansprüche,
**dadurch gekennzeichnet, daß** die Datenschnittstelle (9) an dem Hausgerät (2) über eine Datenverbindung (10) auf Infrarot-Basis mit dem Mobiltelefon (13), dem für Mobilfunk ausgerüsteten Computer oder einem ähnlichen Gerät der Kommunikationstechnik verbunden ist.

4. Vorrichtung (1) nach einem der vorhergehenden Ansprüche,
**dadurch gekennzeichnet, daß** die Datenschnittstelle (9) dem IrDA-Standard, dem Blue-Tooth-Standard oder einem vergleichbaren Standard entsprechend ausgebildet ist.

5. Vorrichtung (1) nach dem vorhergehenden Anspruch,
**dadurch gekennzeichnet, daß** das Hausgerät (2) einen Infrarot-Transmitter und einen Infrarot-Receiver einer entsprechenden Steuerungslogik besitzt.

6. Vorrichtung (1) nach einem der vorhergehenden Ansprüche,
**dadurch gekennzeichnet, daß** die Datenschnittstelle (9) für eine drahtlose Datenverbindung (10) oder eine Datenkommunikation mittels Infrarot über Distanzen von bis zu ca. 1 m mit einer Datenmenge von ca. 9.6 bis etwa 115,2 kBit/s ausgebildet ist.

7. Vorrichtung (1) nach dem vorhergehenden Anspruch,
**dadurch gekennzeichnet, daß** die Datenschnittstelle (9) für eingehende Infrarot-Signale einen räumlichen Akzeptanzwinkel von ungefähr 15 bis ca. 30° rotationssymmetrisch um eine optische Achse aufweist.

8. Vorrichtung (1) nach einem der vorhergehenden Ansprüche,
**dadurch gekennzeichnet, daß** das Mobiltelefon (13), der für Mobilfunk ausgerüstete Computer oder ein ähnliches Gerät der Kommunikationstechnik mit einem Speicher mindestens zur Zwischenspeicherung empfangener und/oder zu versendender Daten versehen ist.

9. Vorrichtung (1) nach einem der vorhergehenden Ansprüche,
**dadurch gekennzeichnet, daß** das Hausgerät (2) und/oder das Mobiltelefon (13), der für Mobilfunk ausgerüsteten Computer oder ein ähnliches Gerät der Kommunikationstechnik zur Übersendung einer Anforderungsskizze eines Anwenders unter Angabe eines jeweils betreffenden Hausgerätes (2) als eine Meldung an den Dienstanbieter (4) ausgebildet ist.

10. Vorrichtung (1) nach einem der vorhergehenden Ansprüche,
**dadurch gekennzeichnet, daß** auf dem Server-Rechner (20) des Dienstanbieters (4) Softwaremodifikationen, aktualisierte Steuerungs-Software und/oder spezifische individuelle Anwender- und Kundendienst-Programme flexibel und immer auf dem neuesten technischen Stand als Up-date verfügbar oder mobil und vorzugsweise weltweit verfügbar gespeichert sind.

11. Verfahren zur Eingabe von Informationen in eine Steuereinheit (7), insbesondere in eine zentrale Steuereinheit eines Hausgerätes (2),
**dadurch gekennzeichnet, daß** über ein Mobiltelefon (13), einen für Mobilfunk ausgerüsteten Computer oder ein ähnliches Gerät der Kommunikationstechnik eine Datenverbindung (10) zwischen dem Hausgerät (2) und einem Server-Rechner (20) eines Dienstanbieters (4) aufgebaut wird, und über diese Datenverbindung (10) Daten oder Informationen in die Steuereinheit (7) des Hausgerätes (2) übertragen werden.

12. Verfahren nach dem vorhergehenden Anspruch,
**dadurch gekennzeichnet, daß** eine Datenverbindung (10) zwischen dem Mobiltelefon (13), einem für Mobilfunk ausgerüsteten Computer oder einem ähnlichen Gerät der Kommunikationstechnik als flexible Kurzverbindung ausgebildet ist und insbesondere nach dem IrDA-Standard arbeitet.

13. Verfahren nach Anspruch 11,
**dadurch gekennzeichnet, daß** die Datenverbindung (10) zwischen dem Mobiltelefon (13), einem für Mobilfunk ausgerüsteten Computer oder einem ähnlichen Gerät der Kommunikationstechnik nach dem Bluetooth-Standard arbeitet.

14. Verfahren nach einem der vorhergehenden Ansprüche 11 bis 13,
**dadurch gekennzeichnet, daß** die Daten in dem Mobiltelefon (13), einem für Mobilfunk ausgerüsteten Computer oder einem ähnlichen Gerät der Kommunikationstechnik zwischengespeichert werden.

15. Verfahren nach einem der vorhergehenden Ansprüche 11 bis 14,
**dadurch gekennzeichnet, daß** mit oder nach dem Eingang von Daten in dem Mobiltelefon (13), einem für Mobilfunk ausgerüsteten Computer oder einem ähnlichen Gerät der Kommunikationstechnik der Eingang mit einer Angabe des betreffenden Hausgerätes (2) angezeigt wird, insbesondere in Form einer SMS, einer eMail oder einer sonstigen akustischen, optischen und/oder taktilen Nachricht für einen Anwender oder Betreiber des Hausgerätes (2).

16. Verfahren nach einem der vorhergehenden Ansprüche 11 bis 15,
**dadurch gekennzeichnet, daß** von einem Hausgerät (2) und/oder dem Mobiltelefon (13), einem für Mobilfunk ausgerüsteten Computer oder einem ähnlichen Gerät der Kommunikationstechnik aus eine konkretisierte Meldung eines Anwenders an einem Standort (A) an den Dienstanbieter (4) abgesandt wird, wobei diese Meldung eine Anforderungsskizze und eine Typisierung des jeweils betreffenden Hausgerätes (2) umfaßt.

17. Verfahren nach einem der vorhergehenden Ansprüche 11 bis 16,
**dadurch gekennzeichnet, daß** eine Abrechnung für eine durch den Dienstanbieter (4) erbrachte Dienstleistung über die Rechnung des Mobiltelefons (13) oder über eine Abrechnung einer anderen Kommunikationsdienstleistung vorgenommen wird.

18. Verfahren nach einem der vorhergehenden Ansprüche 11 bis 17,
**dadurch gekennzeichnet, daß** Softwaremodifikation, Aktualisierungen oder spezifische individuelle Anwender- und/oder Kundendienst-Programme mobil und insbesondere weltweit auf dem neuesten technischen Stand von einem Server-Rechner (20) des Dienstanbieters (4) aus in das Hausgerät (2) übertragen werden.

19. Verfahren nach einem der vorhergehenden Ansprüche 11 bis 18,
**dadurch gekennzeichnet, daß** im Fehlerfall eine Ferndiagnose von dem Dienstanbieter (4) aus über die Datenverbindung (10) zwischen dem Hausgerät (2), dem Mobiltelefon (13), einem für Mobilfunk ausgerüsteten Computer oder einem ähnlichen Gerät der Kommunikationstechnik und dem Dienstanbieter (4) ermöglicht wird.

20. Verfahren nach einem der vorhergehenden Ansprüche 11 bis 19,
**dadurch gekennzeichnet, daß** eine Ansage und/oder Statusanzeige und/oder Anweisungen zur Bedienung von dem Dienstanbieter (4) aus für den Anwender am Standort (A) an dem Mobiltelefon (13) erfolgen, insbesondere in einem Fehlerfall.

21. Verfahren nach einem der vorhergehenden Ansprüche 11 bis 20,
**dadurch gekennzeichnet, daß** durch den Dienstanbieter (4) an dem Hausgerät (2) neue Dienste, Dienstleistungen, Funktionen etc., wie z. B. ein temporäres Leasing von zusätzlichen Gerätefunktionen auf Anforderung durch den Anwender angeboten werden.

22. Verfahren nach einem der vorhergehenden Ansprüche 11 bis 21,
**dadurch gekennzeichnet, daß** ortsabhängige Parametereinstellungen, wie z. B. Einstellung der Wasserhärte bei Geschirrspülern oder Waschmaschinen oder lokale Stromtarife, automatisiert abgerufen und/oder von dem Dienstanbieter (4) aus aktualisiert werden.
